# FASCICULE DE BREVET EUROPEEN

(11) **EP 1 020 676 B1**
(45) Date de publication et mention de la délivrance du brevet: **23.07.2003**
(21) Numéro de dépôt: 00400060.0
(22) Date de dépôt: 12.01.2000
(51) Int. Cl.: F16L 19/12

(54) **Dispositifs de raccordement de conduites, particulier pour installations sanitaires**
Vorrichtung zum Verbinden von Rohren, insbesondere für Sanitärgegenstände
Device for connecting pipes, in particular for sanitary installations

(30) Priorité: 14.01.1999 FR 9900333
(43) Date de publication de la demande: 19.07.2000
(73) Titulaire: Anessi, Jacques, F-38180 Seyssins (FR)
(72) Inventeur: Anessi, Jacques, F-38180 Seyssins (FR)
(74) Mandataire: Casalonga, Axel

(56) Documents cités:
- FR-A- 2 740 531
- GB-A- 485 480
- GB-A- 2 043 814
- GB-A- 2 077 380
- US-A- 2 247 032
- US-A- 4 138 145

## Description

La présente invention se rapporte au domaine des dispositifs de raccordement de conduites, en particulier de conduites d'eau pour installations sanitaires.

On connaît un dispositif de raccordement de conduites qui comprend un écrou destiné à être traversé par la partie d'extrémité d'une première conduite et à être vissé sur une partie filetée d'une seconde conduite afin de comprimer, autour de la première conduite et entre son épaulement et l'extrémité de la seconde conduite, une rondelle d'accrochage de la première conduite et une rondelle d'étanchéité.

Pour le montage de ce dispositif de raccordement, l'installateur enfile sur la première conduite l'écrou, puis la rondelle d'accrochage, puis la rondelle d'étanchéité. Après quoi, l'installateur visse l'écrou sur la seconde conduite.

La présente invention a pour but un perfectionnement au dispositif de raccordement de conduites ci-dessus de façon à faciliter le travail de l'installateur et éviter toutes erreurs de montage notamment du sens de la rondelle d'accrochage.

Le dispositif de raccordement de conduites selon la présente invention est tel qu'il comprend des moyens de retenue mettant en coopération la partie périphérique de la rondelle d'étanchéité et la paroi dudit passage axial de l'écrou de façon à retenir, avant raccordement, ladite rondelle d'accrochage et ladite rondelle d'étanchéité dans ledit passage axial de l'écrou et que ladite partie taraudée s'étend au moins jusqu'à proximité de la face avant de la rondelle d'étanchéité de telle sorte que lesdits moyens de retenue n'empêchent pas, lors du raccordement, l'appui de la face d'extrémité de la seconde conduite sur la face avant de ladite rondelle d'étanchéité.

Selon l'invention, lesdits moyens de retenue peuvent avantageusement être formés en avant de la face avant de ladite rondelle d'étanchéité.

Selon une variante de la présente invention, lesdits moyens de retenue comprennent une gorge annulaire ménagée dans le passage axial dudit écrou, ladite rondelle d'étanchéité présentant un diamètre extérieur supérieur au diamètre intérieur de ladite partie taraudée et étant engagée par dessous cette partie taraudée jusqu'à venir librement dans ladite gorge annulaire.

Selon une autre variante de la présente invention, la partie périphérique de ladite rondelle d'étanchéité comprend un bourrelet annulaire s'engageant dans ladite gorge annulaire de l'écrou.

Selon une autre variante de la présente invention, la partie périphérique de ladite rondelle d'étanchéité est filetée de manière à se visser dans ladite partie taraudée.

Selon la présente invention, ladite rondelle d'étanchéité est de préférence filetée de manière à se visser dans ladite partie taraudée jusqu'à venir librement dans ladite gorge annulaire.

Selon une variante de la présente invention, le bord périphérique de ladite rondelle d'étanchéité comprend un chanfrein facilitant son introduction dans le passage axial dudit écrou.

Selon une autre variante de la présente invention, l'écrou comprend dans son passage axial une gorge annulaire, un organe annulaire étant engagé dans cette gorge et s'étendant en avant du bord périphérique de ladite rondelle d'étanchéité introduite dans ledit écrou.

Selon une autre variante de la présente invention, ledit organe annulaire est un jonc.

Selon une autre variante de la présente invention, ledit organe annulaire comprend des parties intérieures et/ou extérieures en saillie radiale.

Selon une autre variante de la présente invention, lesdits moyens de retenue comprennent un matériau adhérent, notamment à base d'acétone, déposé contre la paroi dudit passage axial de l'écrou et en avant du bord périphérique de ladite rondelle d'étanchéité introduite dans ledit écrou.

Selon la présente invention, ledit matériau adhérent peut avantageusement être engagé dans une gorge annulaire réalisée dans la paroi dudit passage axial de l'écrou.

Selon la présente invention, ledit matériau adhérent peut aussi être engagé dans au moins un filet de la partie taraudée de l'écrou.

Selon la présente invention, ledit matériau adhérent est de préférence déposé sous forme de gouttes réparties.

Selon une autre variante d'exécution de l'invention, ladite rondelle d'étanchéité est formée d'un matériau coulé et durci dans l'écrou au-dessus de ladite rondelle d'accrochage et autour d'un noyau amovible ou escamotable.

Selon l'invention, la partie périphérique de ladite rondelle d'étanchéité coulée s'étend de préférence dans la partie taraudée de l'écrou.

Selon l'invention, une pastille annulaire peut avantageusement être disposée sur ladite rondelle d'accrochage avant coulée de ladite rondelle d'étanchéité.

Selon l'invention, un matériau anti-adhérence peut avantageusement être déposé contre la paroi du passage axial de l'écrou avant coulée de ladite rondelle d'étanchéité.

La présente invention sera mieux comprise à l'étude de dispositifs de raccordement comprenant des écrous équipés de moyens de retenue pour retenir une rondelle d'accrochage et une rondelle d'étanchéité, décrits à titres d'exemples non limitatifs et illustrés par le dessin sur lequel :
- la figure 1 représente une coupe axiale d'un dispositif de raccordement de conduites, en position de montage, comprenant un écrou selon la présente invention ;
- la figure 2 représente une vue en bout du dispositif de la figure 1 ;
- la figure 3 représente une coupe axiale de l'écrou équipé de la figure 1 ;
- la figure 4 représente une coupe axiale d'un autre écrou équipé selon la présente invention ;
- la figure 5 représente une coupe axiale d'un autre écrou équipé selon la présente invention ;
- la figure 6 représente une coupe axiale d'un autre écrou équipé selon la présente invention ;
- la figure 7 représente une coupe axiale d'un autre écrou équipé selon la présente invention ;
- la figure 8 représente une vue de dessus de l'anneau de retenue de l'écrou de la figure 7 ;
- la figure 9 représente une coupe axiale d'un autre écrou équipé selon la présente invention ;
- la figure 10 représente une vue de dessus de l'écrou de la figure 9 ;
- la figure 11 représente une coupe axiale d'un autre écrou équipé selon la présente invention ;
- la figure 12 représente une coupe axiale d'un autre écrou équipé selon la présente invention ;
- et la figure 13 représente une coupe axiale d'un autre écrou équipé selon la présente invention.

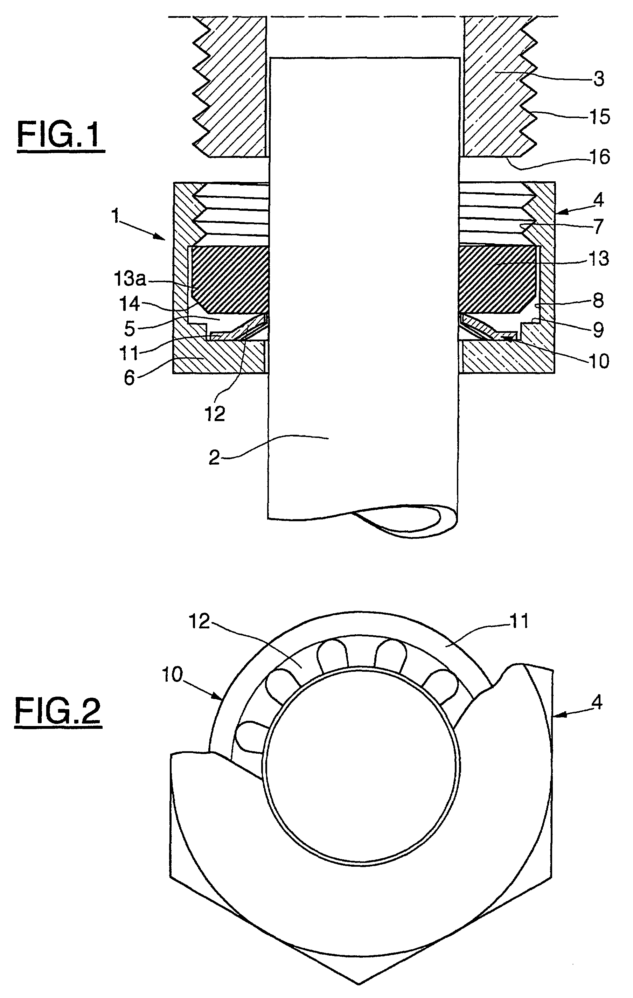

En se reportant aux figures 1 à 3, on voit qu'on a représenté un dispositif 1 de raccordement de conduite permettant d'accoupler en alignement, de façon étanche, une première conduite 2 à une seconde pièce 3 constituée par une seconde conduite ou un élément de raccordement d'une seconde conduite.

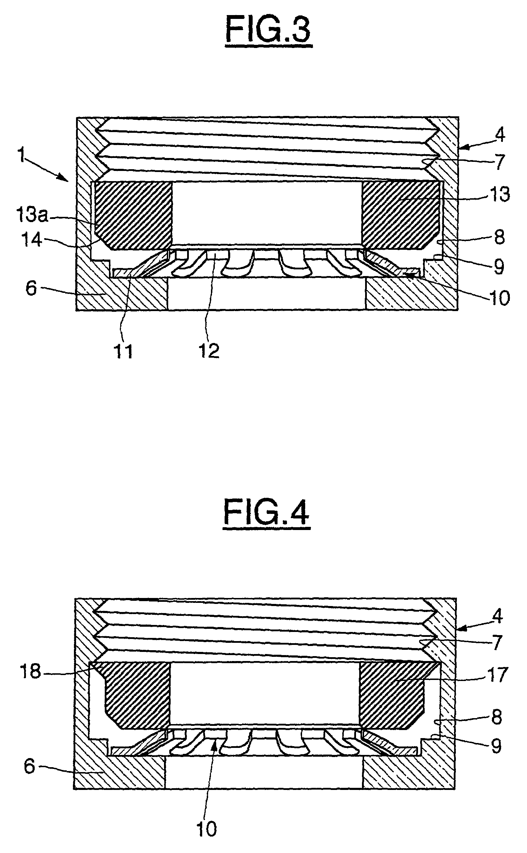

Comme le montre la figure 3, le dispositif 1, tel qu'il sort d'usine de fabrication et tel qu'il est disponible pour un installateur, comprend un écrou 4 qui présente, dans son passage axial 5, d'une part un épaulement annulaire 6 et d'autre part une partie taraudée 7.

Entre l'épaulement 6 et la partie taraudée 7, la paroi intérieure de l'écrou 2 comprend une gorge annulaire 8 laissant une partie cylindrique 9 adjacente à l'épaulement 6 et de diamètre correspondant sensiblement au diamètre intérieur de la partie taraudée 7.

Dans l'écrou 4 est disposée une rondelle métallique d'accrochage 10 de forme tronconique, dont la partie périphérique 11 vient en appui contre l'épaulement 6 et s'étend à faible distance de la partie cylindrique 9. Cette rondelle d'accrochage 10 présente une multiplicité de dents radiales 12 s'étendant vers l'intérieur, à distance de l'épaulement 6.

Sur la rondelle d'accrochage 10 est disposée une rondelle d'étanchéité 13, relativement épaisse, dont le diamètre extérieur est supérieur au diamètre intérieur de la partie taraudée 7 et qui est par exemple en une matière caoutchouteuse. Cette rondelle d'étanchéité 13 est engagée dans l'écrou 4, à force par dessus la partie taraudée 7, de manière à ce que sa partie périphérique 13a vienne s'engager librement dans la gorge annulaire 8. Afin de faciliter cette mise en place, la rondelle d'étanchéité 13 présente un chanfrein périphérique 14.

Ainsi, dans cette position prémontée réalisée en usine, la rondelle d'accrochage 10 et la rondelle d'étanchéité 13 sont retenues dans l'écrou 2.

L'installateur recevant de l'usine de production l'écrou 4 ainsi équipé de la rondelle d'accrochage 10 et de la rondelle d'étanchéité 13, il lui suffit, comme le montre la figure 1, d'engager la partie d'extrémité de la conduite 2 au travers de l'épaulement 6, de la rondelle d'accrochage 10 et de la rondelle d'étanchéité 12 de l'écrou 4. Pour faciliter l'engagement de la conduite 2, la rondelle d'étanchéité 13 peut avantageusement présenter un chanfrein ou cône d'entrée du côté de la rondelle d'accrochage 10.

Un jeu est de préférence prévu entre d'une part la conduite 2 et d'autre part l'épaulement 6 et la rondelle d'accrochage 10, tandis que la conduite 2 pénètre avec contact et en glissant au travers de la rondelle d'étanchéité 13, la rondelle d'étanchéité 13 et l'écrou coopérant pour que cette opération s'effectue sans que cette rondelle ne s'échappe de la gorge 8.

Ceci étant fait, l'installateur place la conduite 2 en alignement avec la conduite 3 et visse l'écrou 4 sur la partie d'extrémité filetée 15 de cette conduite 3.

En serrant convenablement l'écrou 4, la rondelle d'accrochage 10 et la rondelle d'étanchéité 13 se trouvent prises entre l'épaulement 6 et la face radiale d'extrémité 16 de la conduite 3. Sous l'effet de la force de serrage, la rondelle d'étanchéité 13 s'écrase et les dents 12 de la rondelle d'accrochage 10 se rapprochent de l'épaulement 6, les extrémités des dents 12 venant en prise avec la surface extérieure de la conduite 2 pour constituer un ancrage empêchant la conduite 2 de s'extraire de l'écrou 4.

Il résulte de ce qui précède que l'installateur dispose d'un écrou 4 directement équipé de la rondelle d'accrochage 10 et de la rondelle d'étanchéïté 13, sans risque pour lui d'erreur de montage ou d'inversion de ces dernières.

En se reportant à la figure 4, on voit qu'on a représenté une rondelle d'étanchéité 17 prémontée dans l'écrou 4 au dessus de la rondelle d'accrochage 10, qui se différencie de la rondelle d'étanchéité 13 par le fait qu'elle présente un diamètre extérieur sensiblement égal au diamètre intérieur de la partie taraudée 7 de l'écrou 4. Dans cette variante, cette rondelle d'étanchéité 17 présente à sa périphérie un bourrelet annulaire 18 de retenue qui vient s'engager dans la gorge annulaire 8 de l'écrou 4 pour produire les mêmes effets que la partie périphérique 13a de la rondelle d'étanchéité 13.

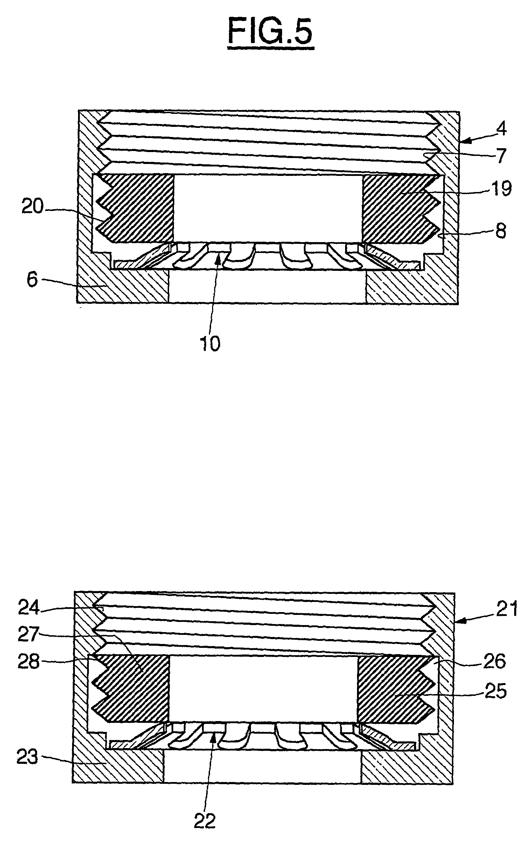

En se reportant à la figure 5, on voit qu'on a représenté l'écrou 4 équipé cette fois d'une rondelle d'étanchéité 19 qui présente un filetage extérieur 20 correspondant au filet de la partie taraudée 7.

Ainsi, dans cet exemple, la mise en place de la rondelle d'étanchéité 19 dans l'écrou 4, au-dessus de la rondelle d'accrochage 10, peut se faire par vissage jusqu'à ce que la partie périphérique filetée 20 de la rondelle d'étanchéité 19 vienne librement s'installer dans la gorge annulaire 8.

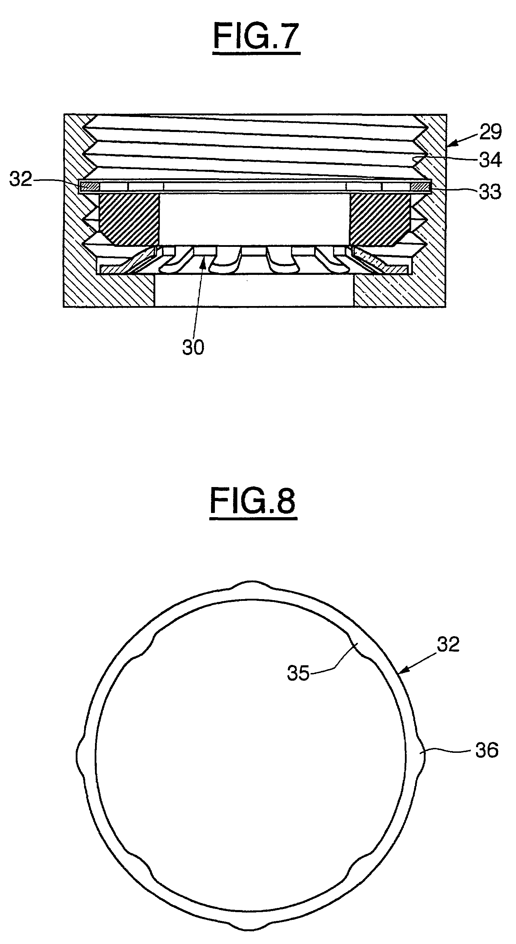

En se reportant à la figure 6, on voit qu'on a représenté un écrou 21 qui porte une rondelle d'accrochage 22 en appui sur son épaulement annulaire intérieur 23 devant lequel il présente une partie taraudée 24 ménagée dans son passage cylindrique. Sur la rondelle d'accrochage 22 est installée une rondelle d'étanchéité 25 qui présente un diamètre extérieur sensiblement égal au diamètre intérieur de la partie taraudée 24.

Dans sa partie taraudée 24, l'écrou 21 présente une gorge annulaire 26 formée au niveau de la face radiale avant 27 de la rondelle d'étanchéité 26 opposée à la rondelle d'accrochage 22 et dans laquelle est engagé un jonc annulaire de retenue 28, par exemple en une matière caoutchouteuse, dont le diamètre intérieur est légèrement inférieur au diamètre intérieur de la partie taraudée 24 de manière à venir en avant du bord périphérique de la face avant 27 de la rondelle d'étanchéité 25.

Ainsi, le jonc 28 constitue un organe de retenue de la rondelle d'accrochage 22 et de la rondelle d'étanchéité 25 dans l'écrou 21, susceptible d'être installé facilement en le faisant passer devant la partie taraudée 27 et sans constituer- ultérieurement une gêne lors de l'installation de l'écrou 23 sur par exemple la conduite 4 puisque la rondelle d'étanchéité 25 et le jonc 28 vont s'écraser mutuellement.

En se reportant aux figures 7 et 8, on voit qu'on a représenté un écrou 29 équipé également d'une rondelle d'accrochage 30 et d'une rondelle d'étanchéité 31. Il se différencie de l'écrou 21 par le fait que le jonc annulaire 30 est remplacé par un anneau 32 qui est engagé dans une gorge annulaire 33 réalisée dans la partie 34 et qui s'étend en avant de la face avant de la rondelle d'étanchéité 31. Dans cet exemple, cet anneau de retenue 32 est de forme générale plate et présente, comme le montre la figure 8, quatre parties intérieures en saillie 35 et quatre parties extérieures en saillie 336, qui limitent son volume sans nuire à sa fonction de retenue.

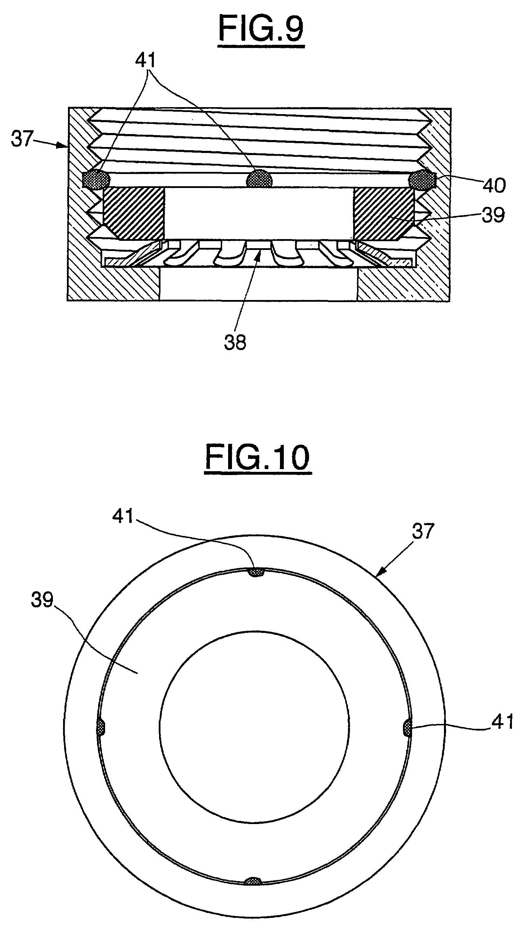

En se reportant aux figures 9 et 10, on voit qu'on a représenté un écrou 37 qui se rapproche de celui représenté sur la figure 6 et qui est équipé également d'une rondelle d'accrochage 38 et d'une rondelle d'étanchéité 39. Cet écrou présente également, au niveau de la face avant de la rondelle 39, une gorge annulaire 40.

Dans cet exemple, on a déposé quatre gouttes 41 d'un matériau adhérent, de telle que ces gouttes pénètrent dans la gorge annulaire 40 et débordent en avant de la face avant de la rondelle d'étanchéité 39, ces gouttes étant réparties à la périphérie de la rondelle 39. Ce matériau, par exemple à base d'une matière plastique adhérente de préférence semi-dur, est choisi de façon à adhérer contre la paroi intérieure de l'écrou 37 et/ou contre la face avant de la rondelle d'étanchéité 39 et retenir lesdites rondelles dans l'écrou 37, sans constituer une gêne lors de l'installation par vissage de cet écrou ainsi équipé sur par exemple la conduite 3.

Dans un exemple de réalisation, les gouttes 41 peuvent être déposées grâce à une tête d'injection automatique à plusieurs buses.

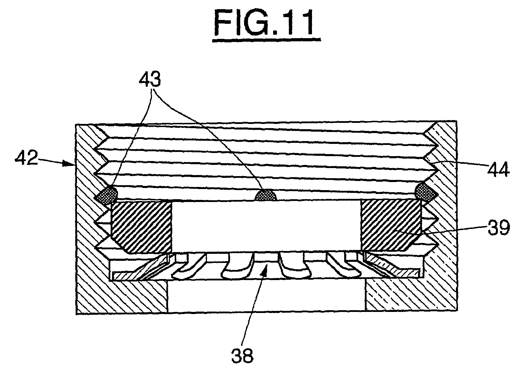

En se reportant à la figure 11, on voit qu'on a représenté un écrou 42 qui se rapproche de celui de la figure 9 mais qui ne présente plus de gorge annulaire, les gouttes 43 en un matériau adhérents étant directement déposées contre la paroi intérieure de l'écrou 42, dans le ou les filets de sa partie taraudée 44 et en avant de la rondelle d'étanchéité 39.

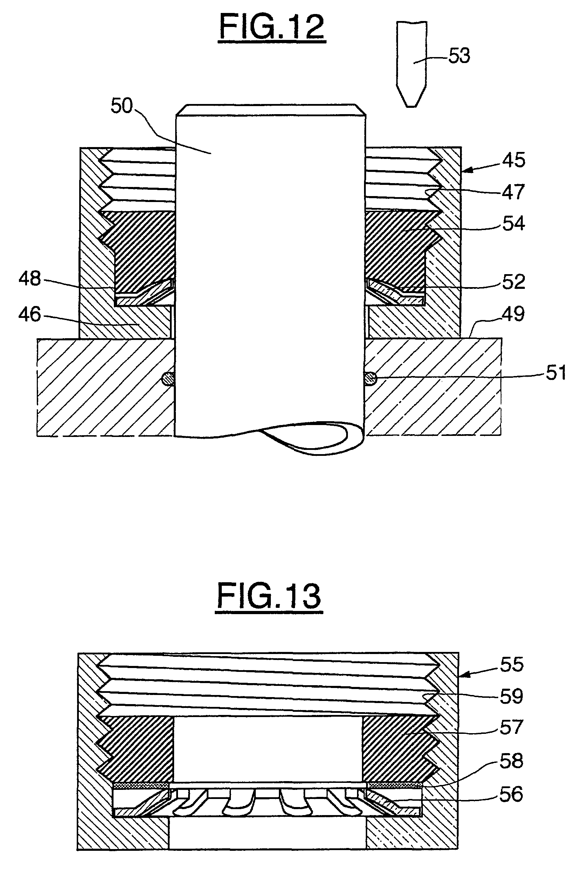

En se reportant à la figure 12, on voit qu'on a représenté un écrou 45 qui comporte un épaulement annulaire intérieur 46 devant lequel il présente une partie taraudée 47 ménagée dans son passage cylindrique 48.

On installe l'écrou 45 sur une table 49 en plaçant son épaulement 46 du côté de cette table, autour d'un piston cylindrique 50 amovible ou escamotable. Ce piston 50 traverse la table 49 et l'écrou 45 et présente un diamètre légèrement inférieur au diamètre intérieur de l'épaulement 46. Un joint annulaire d'étanchéité 51 est placé entre le piston 50 et la table 49.

On dispose ensuite une rondelle d'accrochage 52 dans le passage 48 de l'écrou, autour du piston 50, cette rondelle venant se placer sur l'épaulement annulaire 46 comme dans les exemples précédents.

Grâce à au moins une buse 53 placée au-dessus de l'écrou 45, on coule une matière liquide chaude dans l'écrou 45, par exemple une matière synthétique à base de polyamide ou d'élastomère ou autres alliages, de façon à remplir annulairement et partiellement cet écrou au-dessus de la rondelle d'accrochage 52 de cette matière qui, en se refroidissant, durçit et constitue une rondelle annulaire d'étanchéité 54 coulée ou moulée in situ dans l'écrou 45, la partie périphérique de cette rondelle 54 remplissant les premiers filets de la partie taraudée 47 situés du côté de l'épaulement annulaire 46.

Après quoi, on escamote le piston 50 au-delà de la surface de la table 49 de façon à libérer l'écrou 45.

On dispose alors, comme dans les exemple précédents, d'un écrou 45 muni d'une rondelle d'accrochage 52 et d'une rondelle d'étanchéité 54 dans son passage 48 et prêt à l'emploi.

En se reportant à la figure 13, on voit qu'on a représenté un écrou 55 identique à celui de la figure 12 et équipé de façon identique d'une rondelle d'accrochage 56 et d'une rondelle d'étanchéité 57. Dans cet exemple, on voit que, préalablement à la coulée de la rondelle d'étanchéité 57, on dispose une pastille annulaire ou rondelle d'arrêt 58 sur la rondelle d'accrochage 55 de façon à éviter que la matière coulée constituant la rondelle d'étanchéité 56 après refroidissement ne traverse la rondelle d'accrochage 56. La pastille annulaire 58, de faible épaisseur, peut être choisie en un matériau souple tel que du papier ou une matière plastique tel qu'un polyéthylène.

Par ailleurs, il est souhaitable qu'une faible couche d'un matériau anti-adhérence 59 soit déposée contre la paroi du passage axial 48 de l'écrou avant coulée de la rondelle d'étanchéité 56 afin de permettre de faciliter tout mouvement relatif ultérieur de la rondelle d'étanchéité 57 dans l'écrou 55, notamment par rapport à sa partie taraudée.

La présente invention ne se limite pas aux exemples ci-dessus décrits. Bien d'autres variantes de réalisations sont possibles sans sortir du cadre défini par les revendications annexées.

## Revendications

1. Dispositif de raccordement de conduites, comprenant un écrou qui présente, dans son passage axial, d'une part un épaulement annulaire et d'autre part une partie taraudée, cet écrou étant destiné à être traversé par la partie d'extrémité d'une première conduite et être vissé sur une partie filetée solidaire d'une seconde conduite afin de comprimer, autour de la première conduite et entre son épaulement et l'extrémité de la seconde conduite, une rondelle d'accrochage de la première conduite et une rondelle d'étanchéité, **caractérisé par le fait qu'**il comprend des moyens de retenue (8, 13a) mettant en coopération la partie périphérique de la rondelle d'étanchéité (13) et la paroi dudit passage axial de l'écrou (4) de façon à retenir, avant raccordement, ladite rondelle d'accrochage (10) et ladite rondelle d'étanchéité (13) dans ledit passage axial de l'écrou (4) et que ladite partie taraudée (7) s'étend au moins jusqu'à proximité de la face avant de la rondelle d'étanchéité (13) de telle sorte que lesdits moyens de retenue (8, 13a) n'empêchent pas, lors du raccordement, l'appui de la face d'extrémité de la seconde conduite sur la face avant de ladite rondelle d'étanchéité (13).

2. Dispositif de raccordement selon la revendication 1, **caractérisé par le fait que** lesdits moyens de retenue sont formés en avant de la face avant de ladite rondelle d'étanchéité (13).

3. Dispositif de raccordement selon l'une des revendications 1 et 2, **caractérisé par le fait que** lesdits moyens de retenue comprennent une gorge annulaire (8) ménagée dans le passage axial dudit écrou, ladite rondelle d'étanchéité présentant un diamètre extérieur supérieur au diamètre intérieur de ladite partie taraudée (7) et étant engagée par dessous cette partie taraudée jusqu'à venir librement dans ladite gorge annulaire.

4. Dispositif de raccordement selon la revendication 3, **caractérisé par le fait que** la partie périphérique de ladite rondelle d'étanchéité comprend un bourrelet annulaire (20) s'engageant dans ladite gorge annulaire de l'écrou.

5. Dispositif de raccordement selon l'une quelconque des revendications précédentes, **caractérisé par le fait que** la partie périphérique de ladite rondelle d'étanchéité (19) est filetée (20) de manière à se visser dans ladite partie taraudée (7).

6. Dispositif de raccordement selon la revendication 5, **caractérisé par le fait que** ladite rondelle d'étanchéité (19) est vissée jusqu'à venir librement dans une gorge annulaire (8) de l'écrou.

7. Dispositif de raccordement selon l'une quelconque des revendications précédentes, **caractérisé par le fait que** le bord périphérique de ladite rondelle d'étanchéité comprend un chanfrein (14) facilitant son introduction dans le passage axial dudit écrou.

8. Dispositif de raccordement selon l'une des revendications 1 et 2, **caractérisé par le fait que** lesdits moyens de retenue comprennent une gorge annulaire (33) ménagée dans le passage axial dudit écrou, un organe annulaire (32) étant engagé dans cette gorge et s'étendant en avant du bord périphérique de ladite rondelle d'étanchéité (31) introduite dans ledit écrou.

9. Dispositif de raccordement selon la revendication 8, **caractérisé par le fait que** ledit organe annulaire est un jonc (32).

10. Dispositif de raccordement selon la revendication 8, **caractérisé par le fait que** ledit organe annulaire (32) comprend des parties intérieures et/ou extérieures en saillie radiale (35, 36).

11. Dispositif de raccordement selon l'une des revendications 1 et 2, **caractérisé par le fait que** lesdits moyens de retenue comprennent un matériau adhérent (41), notamment à base d'acétone, déposé contre la paroi dudit passage axial de l'écrou et en avant du bord périphérique de ladite rondelle d'étanchéité (26) introduite dans ledit écrou.

12. Dispositif de raccordement selon la revendication 11, **caractérisé par le fait que** ledit matériau adhérent est engagé dans une gorge annulaire (40) réalisée dans la paroi dudit passage axial de l'écrou (37).

13. Dispositif de raccordement selon la revendication 11, **caractérisé par le fait que** ledit matériau adhérent est engagé dans au moins un filet de la partie taraudée (44) de l'écrou (42).

14. Dispositif de raccordement selon l'une quelconque des revendications 11 à 13, **caractérisé par le fait que** ledit matériau adhérent est déposé sous forme de gouttes réparties (41).

15. Dispositif de raccordement selon l'une quelconque des revendications, **caractérisé par le fait que** ladite rondelle d'étanchéité (54) est formée d'un matériau coulé et durci dans l'écrou au-dessus de ladite rondelle d'accrochage (52) et autour d'un noyau amovible ou escamotable (50).

16. Dispositif de raccordement selon la revendication 15, **caractérisé par le fait que** la partie périphérique de ladite rondelle d'étanchéité coulée (54) s'étend dans la partie taraudée (47) de l'écrou.

17. Dispositif de raccordement selon la revendication 15, **caractérisé par le fait qu'**une pastille annulaire (58) est disposée sur ladite rondelle d'accrochage (56) avant coulée de ladite rondelle d'étanchéité (57).

18. Dispositif de raccordement selon la revendication 15, **caractérisé par le fait qu'**un matériau anti-adhérence (59) est déposé contre la paroi du passage axial (48) de l'écrou avant coulée de ladite rondelle d'étanchéité (57).

## Patentansprüche

1. Vorrichtung zur Verbindung von Rohren mit einer Mutter, die in ihrem axialen Durchgang einerseits eine ringförmige Schulter und andererseits einen mit einem Innengewinde versehenen Abschnitt aufweist, wobei diese Mutter dazu vorgesehen ist, von einem Endabschnitt eines ersten Rohrs durchdrungen zu werden und an einem mit einem Außengewinde versehenen Abschnitt, der mit dem zweiten Rohr fest verbunden ist, angeschraubt zu werden, um um das erste Rohr herum und zwischen ihrer Schulter und dem Ende des zweiten Rohrs eine Scheibe zur Sicherung des ersten Rohrs sowie eine Dichtungsscheibe einzuzwängen, **dadurch gekennzeichnet, dass** sie Haltemittel (8, 13a) aufweist, die den Umfangsbereich der Dichtungsscheibe (13) mit der Wand des axialen Durchgangs der Mutter (4) in der Weise zusammenwirken lassen, um vor dem Verbinden die Sicherungsscheibe (10) und die Dichtungsscheibe (13) in dem axialen Durchgang der Mutter (4 )zurückzuhalten, und dass sich der Abschnitt mit Innengewinde (7) wenigstens bis in die Nähe der vorderen Stirnfläche der Dichtungsscheibe (13) in der Weise erstreckt, dass die Haltemittel (8, 13a) während des Verbindens die Anlage der Endfläche des zweiten Rohrs an der vorderen Stirnfläche der Dichtungsscheibe (13) nicht behindern.

2. Verbindungsvorrichtung nach Anspruch 1, **dadurch gekennzeichnet, dass** die Haltemittel vor der vorderen Stirnfläche der Dichtungsscheibe (13) ausgebildet sind.

3. Verbindungsvorrichtung nach einem der Ansprüche 1 und 2, **dadurch gekennzeichnet, dass** die Haltemittel eine Ringnut (8) aufweisen, die in dem axialen Durchgang der Mutter vorgesehen sind, wobei die Dichtungsscheibe einen Außendurchmesser aufweist, der größer ist als der Innendurchmesser des Abschnitts (7) mit Innengewinde, und sie bis unterhalb des mit Innengewinde versehenen Abschnitts so weit eingeführt ist, bis sie in der Ringnut frei zu liegen kommt.

4. Verbindungsvorrichtung nach Anspruch 3, **dadurch gekennzeichnet, dass** der Umfangsbereich der Dichtungsscheibe einen ringförmigen Wulst (20) aufweist, der in die Ringnut der Mutter eingreift.

5. Verbindungsvorrichtung nach einem der vorhergehenden Ansprüche, **dadurch gekennzeichnet, dass** der Umfangsbereich der Dichtungsscheibe (19) mit einem Gewinde (20) derart versehen ist, um sich in den Abschnitt mit dem Innengewinde (7) einschrauben zu lassen.

6. Verbindungsvorrichtung nach Anspruch 5, **dadurch gekennzeichnet, dass** die Dichtungsscheibe (19) so weit eingeschraubt ist, bis sie in der Ringnut (8) der Mutter frei zu liegen kommt.

7. Verbindungsvorrichtung nach einem der vorhergehenden Ansprüche, **dadurch gekennzeichnet, dass** der Umfangsrand der Dichtungsscheibe eine Abschrägung (14) aufweist, die das Einführen der Dichtungsscheibe in den axialen Durchgang der Mutter erleichtert.

8. Verbindungsvorrichtung nach einem der Ansprüche 1 und 2, **dadurch gekennzeichnet, dass** die Haltemittel eine in dem axialen Durchgang der Mutter vorgesehene ringförmige Nut (33) aufweisen, wobei ein ringförmiges Element (32) in dieser Nut eingefügt ist und sich vor dem Umfangsrand der in die Mutter eingebrachten Dichtungsscheibe (31) befindet.

9. Verbindungsvorrichtung nach Anspruch 8, **dadurch gekennzeichnet, dass** das ringförmige Element ein Sicherungsring (32) ist.

10. Verbindungsvorrichtung nach Anspruch 8, **dadurch gekennzeichnet, dass** das ringförmige Element (32) in radialer Richtung vorragende innere und/oder äußere Abschnitte (35, 36) aufweist.

11. Verbindungsvorrichtung nach einem der Ansprüche 1 und 2, **dadurch gekennzeichnet, dass** die Haltemittel einen Klebstoff (41), insbesondere auf Acetonbasis, aufweisen, der an der Wand des axialen Durchgangs der Mutter und vor dem Umfangsrand der in die Mutter eingeführten Dichtungsscheibe (26) angeordnet ist.

12. Verbindungsvorrichtung nach Anspruch 11, **dadurch gekennzeichnet, dass** der Klebstoff in einer Ringnut (40) eingebracht ist, die in der Wand des axialen Durchgangs der Mutter (37) eingearbeitet ist.

13. Verbindungsvorrichtung nach Anspruch 11, **dadurch gekennzeichnet, dass** der Klebstoff in wenigstens einem Gewindegang des mit Innengewinde versehenen Abschnitts (44) der Mutter (42) eingebracht ist.

14. Verbindungsvorrichtung nach einem der Ansprüche 11 bis 13, **dadurch gekennzeichnet, dass** der Klebstoff in Form von verteilt angeordneten Tropfen (41) angebracht ist.

15. Verbindungsvorrichtung nach einem beliebigen der Ansprüche, **dadurch gekennzeichnet, dass** die Dichtungsscheibe (54) aus einem Material ausgebildet ist, das in die Mutter oberhalb der Sicherungsscheibe (52) und um einen lösbaren oder herausziehbaren Kern (50) herum gegossen und aushärten gelassen wird.

16. Verbindungsvorrichtung nach Anspruch 15, **dadurch gekennzeichnet, dass** der Umfangsbereich der gegossenen Dichtungsscheibe (54) sich bis in den mit Innengewinde versehenen Abschnitt (47) der Mutter hinein erstreckt.

17. Verbindungsvorrichtung nach Anspruch 15, **dadurch gekennzeichnet, dass** vor dem Gießen der Dichtungsscheibe (57) ein ringförmiges Plättchen (58) auf der Sicherungsscheibe (56) angeordnet ist.

18. Verbindungsvorrichtung nach Anspruch 15, **dadurch gekennzeichnet, dass** vor dem Gießen der Dichtungsscheibe (57) ein Antihaftungsmittel (59) an der Wand des axialen Durchgangs (48) angebracht ist.

## Claims

1. Device for connecting ducts, comprising a nut having, in its axial passage, on the one hand an annular shoulder and on the other hand a tapped portion, this nut being intended to have the end portion of a first duct passing through it and to be screwed onto a threaded portion integral with a second duct in order to compress, around the first duct and between its shoulder and the end of the second duct, a lock washer of the first duct and a sealing ring, **characterized in that** it comprises retaining means (8, 13a) placing in cooperation the peripheral portion of the sealing ring (13) and the wall of the said axial passage of the nut(4) so as to retain, before connection, the said lock washer (10) and the said sealing ring (13) in the said axial passage of the nut (4) and that the said tapped portion (7) extends at least up to proximity with the front face of the sealing ring (13) such that the said retaining means (8, 13a) do not prevent, during connection, the abutment of the end face of the second duct against the front face of the said sealing ring (13).

2. Connecting device according to claim 1, **characterized in that** the said retaining means are formed in front of the front face of the said sealing ring (13).

3. Connecting device according to one of claims 1 and 2, **characterized in that** the said retaining means comprise an annular groove (8) formed in the axial passage of the said nut, the said sealing ring having an external diameter greater than the internal diameter of the said tapped portion (7) and being inserted from below until entering freely into the said annular groove.

4. Connecting device according to claim 3, **characterized in that** the peripheral portion of the said sealing ring comprises an annular rim (20) engaged in the said annular groove of the nut.

5. Connecting device according to any one of the foregoing claims, **characterized in that** the peripheral portion of the said sealing ring (19) is threaded (20) so as to be screwed into the said tapped portion (7).

6. Connecting device according to claim 5, **characterized in that** the said sealing ring (19) is screwed as far as coming freely into an annular groove (8) of the nut.

7. Connecting device according to any one of the foregoing claims, **characterized in that** the peripheral edge of the said sealing ring comprises a chamfer (14) facilitating its introduction into the axial passage of the said nut.

8. Connecting device according to one of claims 1 and 2, **characterized in that** the said retaining means comprise an annular groove (33) formed in the axial passage of the said nut, an annular member (32) being engaged in this groove and extending forward of the peripheral edge of the said sealing ring (31) introduced into the said nut.

9. Connecting device according to claim 8, **characterized in that** the said annular member is a retaining ring (32).

10. Connecting device according to claim 8, **characterized in that** the said annular member (32) comprises radially projecting internal and/or external portions (35, 36).

11. Connecting device according to one of claims 1 and 2, **characterized in that** the said retaining means comprise an adhesive material (41), especially acetone-based, deposited against the wall of the said axial passage of the nut and forward of the peripheral edge of the said sealing ring (26) introduced into the said nut.

12. Connecting device according to claim 11, **characterized in that** the said adhesive material is engaged in an annular groove (40) formed in the wall of the said axial passage of the nut (37).

13. Connecting device according to claim 11, **characterized in that** the said adhesive material is engaged in at least one thread of the tapped portion (44) of the nut (42).

14. Connecting device according to any one of claims 11 to 13, **characterized in that** the said adhesive material is deposited in the form of distributed drops (41).

15. Connecting device according to any one of the claims, **characterized in that** the said sealing ring (54) is formed of a material cast and hardened in the nut above the said lock washer (52) and around a removable or retractable core (50).

16. Connecting device according to claim 15, **characterized in that** the peripheral portion of the said cast sealing ring (54) extends into the tapped portion (47) of the nut.

17. Connecting device according to claim 15, **characterized in that** an annular insert (58) is disposed on the lock washer (56) before the said sealing ring (57) is cast.

18. Connecting device according to claim 15, **characterized in that** a nonstick material (59) is deposited against the wall of the axial passage of the nut (48) before the said sealing ring (57) is cast.
